# EUROPÄISCHE PATENTSCHRIFT

(11) **EP 3 158 200 B1**
(45) Veröffentlichungstag und Bekanntmachung des Hinweises auf die Patenterteilung: **01.04.2020**
(21) Anmeldenummer: 15729754.0
(22) Anmeldetag: 10.06.2015
(51) Int. Cl.: F04D 13/06, F04D 29/02, F04D 29/42, H02K 5/128, H02K 7/14

(54) **NASSLÄUFERMOTORPUMPE**
WET-ROTOR MOTOR PUMP
MOTOPOMPE À ROTOR NOYÉ

(30) Priorität: 23.06.2014 DE 102014008971
(43) Veröffentlichungstag der Anmeldung: 26.04.2017
(73) Patentinhaber: WILO SE, 44263 Dortmund (DE)
(72) Erfinder: MATERNE, Thomas, 59348 Lüdinghausen (DE); HOLZ, Frank, 44229 Dortmund (DE); ORTIZ, Renato, 58239 Schwerte (DE)
(74) Vertreter: Cohausz Hannig Borkowski Wißgott
(86) Internationale Anmeldenummer: PCT/EP2015/001162
(87) Internationale Veröffentlichungsnummer: WO 2015/197161

(56) Entgegenhaltungen:
- EP-A1- 1 635 064
- EP-A2- 1 281 870
- EP-A2- 1 703 135
- US-A- 5 009 578
- "Pump Handbook", , 1. Januar 2004 (2004-01-01), XP055156943, Bjerringbro, Denmark Gefunden im Internet: URL:http://net.grundfos.com/doc/webnet/min ing/_downloads/pump-handbook.pdf [gefunden am 2014-12-05]

## Beschreibung

Die Erfindung betrifft eine Nassläufermotorpumpe mit einem von einem Motorgehäuse umgebenen Stator und einem vom Stator durch einen Spalttopf getrennten Rotor, der in dem vom Spalttopf gebildeten Rotorraum läuft und über eine Welle mit dem Pumpenlaufrad verbunden ist.

Nassläuferpumpen sind beispielsweise aus dem US Patent 5,009,578 und den europäischen Patentanmeldungen EP 1 635 064 A1, EP 1 281 870 A2 und EP 1 703 135 A2 bekannt. Bei Nassläufermotorpumpen läuft der Motorenrotor in einem Spalttopf, der den Rotorenraum von dem Motorstator trennt. Hierbei ist es bekannt, den Spalttopf aus Kunststoff auszuführen. Hierzu wird in der vorangemeldeten deutschen Patentanmeldung DE 10 2013 020 387.2 vorgeschlagen, das Motorgehäuse hydraulikseitig mit einem nach innen gerichteten Flansch zu versehen, wodurch Abdichtung, Festigkeit und Dämpfung verbessert werden.

Aufgabe der Erfindung ist es bei einer Nassläufermotorpumpe der eingangs genannten Art, die Abdichtungs-, Fertigkeits- und Dämpfungsfunktionen weiter zu verbessern und eine hohe Medienbeständigkeit zu erreichen. Ferner soll ein separater Lagerträger und/oder ein separates Lagerschild entfallen können.

Diese Aufgaben werden erfindungsgemäß dadurch gelöst, dass das Motorgehäuse an seinem dem Pumpenlaufrad zugewandten Ende einstückig in einen nach innen gerichteten Motorgehäuseflansch übergeht, der zumindest auf der dem Pumpenlaufrad zugewandten Seite von einer Schutzschicht bedeckt ist.

Eine Schutzschicht erhöht die Medienbeständigkeit des Motorgehäuses, insbesondere wenn dieses aus Aluminium oder Grauguss besteht. Zudem werden die Schalldämpfung wesentlich verbessert, die Fertigungsprozesse optimiert und die Herstellungskosten reduziert. Ferner führt dies zu einer höheren Präzision des konstruktiven Aufbaus.

Diese Vorteile werden noch vergrößert, wenn der nach innen gerichtete Motorgehäuseflansch auf der der Pumpenlaufrad abgewandten Seite zumindest teilweise von einer Schutzschicht bedeckt ist.

Von Vorteil ist es, wenn die Schutzschicht eine den Motorgehäuseflansch umgebende insbesondere umspritzte Kunststoffschicht ist. Alternativ wird vorgeschlagen, dass die Schutzschicht aus Keramik besteht. Dies erhöht wesentlich die Korrosions- und Verschleißfestigkeit. Zum Herstellen der oxidischen Schutzschicht eignet sich besonders das Hard-Coat-Verfahren.

Erfindungsgemäß umgibt die Schutzschicht zwischen dem Motorgehäuseflansch und der Motorenwelle ein hydraulikseitiges Radiallager und übernimmt mit dem Motorgehäuseflansch die Funktion eines Lagerträgers. Die Schutzschicht insbesondere zusammen mit einer Flanscherweiterung kann selber die Funktion eines Lagerträgers haben, so dass ein separater Lagerträger entfällt. Dies ist eine erhebliche konstruktive Vereinfachung mit wesentlichen Vorteilen in der Herstellung und Montage bei hoher Präzision des konstruktiven Aufbaus.

Vorzugsweise wird vorgeschlagen, dass das innere Ende des Motorgehäuseflansches eine ringförmige, zum Stator gerichtete, zur Motorachse koaxiale Erweiterung bildet, die von der Schutzschicht umgeben vorzugsweise umspritzt ist und das Radiallager stützt. Eine solche Erweiterung des Motorgehäuseflansches erhöht die Festigkeit und Steifigkeit des Motorgehäuseflansches und bildet zudem eine Stütze für das Radiallager.

Ferner wird vorgeschlagen, dass der Motorgehäuseflansch auf seiner dem Pumpenlaufrad abgewandten Seite einen zum Stator hin vorspringenden, zur Motorachse koaxialen Ring bildet, der das dem Pumpenlaufrad zugewandte Ende des Spalttopfes außen umgibt. Hierbei liegt das dem Pumpenlaufrad zugewandte Ende des Spalttopfes zwischen der Erweiterung und dem Ring des Motorgehäuseflansches ein. Die Dichtigkeit wird erhöht, wenn zwischen dem Ende des Spalttopfes und der ringförmigen Erweiterung des Motorgehäuseflansches ein zur Motorachse koaxialer Dichtring einliegt.

Eine wesentliche Vereinfachung der Herstellung und Montage der Nassläufermotorpumpe wird erreicht, wenn die Schutzschicht aus Kunststoff einstückig mit dem Kunststoff des Spalttopfes verbunden ist. Damit kann die Schutzschicht des Motorgehäuseflansches gleichzeitig mit dem Kunststoff des Spalttopfes vorzugsweise durch Kunststoffspritzen erstellt sein.

Vorzugsweise wird vorgeschlagen, dass der Spalttopf ein Spaltrohr aufweist, das auf der der Hydraulik abgewandten Seite durch ein Dichtungselement verschlossen ist. Hierbei kann das Dichtungselement von dem Lagerflansch des Radiallagers gebildet sein, das die Motorwelle auf dem der Hydraulikseite abgewandten Wellenende lagert.

Ein besonders vorteilhaftes Herstellungsverfahren einer solchen Nassläufermotorpumpe ist gegeben, wenn das hydraulikseitige Radiallager in ein Spritzwerkzeug eingelegt wird und danach der Kunststoff der Schutzschicht des Motorgehäuseflansches und insbesondere des Spalttopfes eingespritzt wird.

Zwei Ausführungsbeispiele der Erfindung sind in den Zeichnungen in axialen Schnitten dargestellt und werden im Folgenden näher beschrieben. Es zeigen
- Fig. 1: ein erstes Ausführungsbeispiel mit einem separaten Spalttopf,
- Fig. 2: ein zweites Ausführungsbeispiel mit einem Spalttopf, der mit der Schutzschicht, die den Motorgehäuseflansch bedeckt, einstückig verbunden ist.

Die Nassläufermotorpumpe weist auf der Hydraulikseite ein Pumpengehäuse 1 auf, das einen Pumpenraum 2 umgibt, in dem ein Pumpenlaufrad 3 läuft. An dem Pumpengehäuse ist koaxial ein Motorgehäuse 4 befestigt, das einen Stator 5 umgibt, in dem ein Spalttopf 6 (oder Spaltrohr) einliegt, der einen Rotorraum bildet, in dem der Motorenrotor 7 läuft. Der Rotor 7 besitzt eine koaxiale Welle 8, die durch zwei innerhalb des Spalttopfes 6 angeordnete Lager 9, 10 geführt ist und an einem Ende das Pumpenlaufrad 3 trägt.

An der Außenwand 11 des Motorgehäuses 4 ist hydraulikseitig ein nach innen gerichteter ringförmiger Motorengehäuseflansch 12 angeformt, an dessen innerem Ende eine ringförmige, buchsenförmige, zur Motorachse koaxiale Erweiterung 12a angeformt ist, deren freies Ende zum Stator 5 hin gerichtet ist. Die ringförmige Erweiterung 12a bildet eine zylindrische koaxiale mittige Öffnung 13, die das Radiallager 9 umgibt, das dem Pumpenlaufrad zugewandt ist.

In einer nicht dargestellten Ausführung ist das freie Ende der ringförmigen Erweiterung 12a zum Pumpenlaufrad 3 hin gerichtet und in einer weiteren nicht dargestellten Ausführung überragt die ringförmige Erweiterung 12a auf beiden Seiten den Motorgehäuseflansch 12.

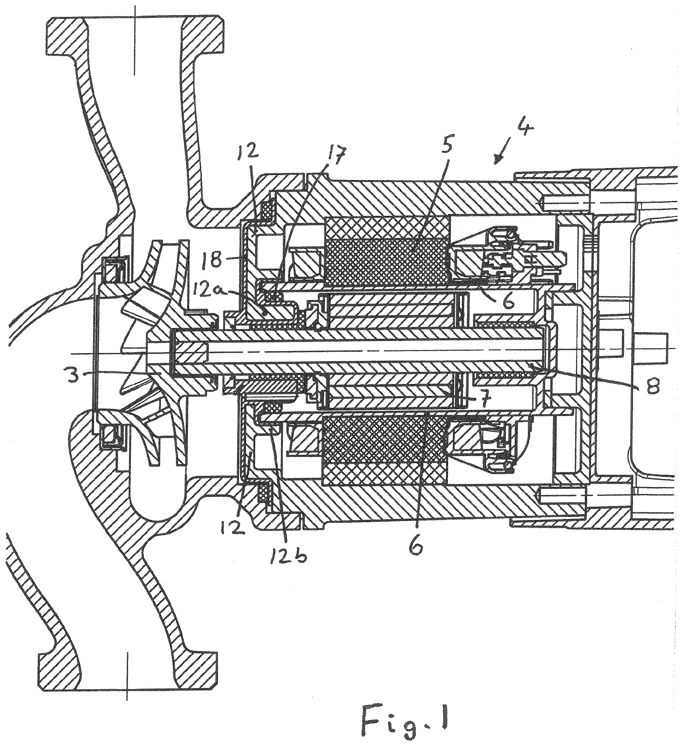

Der Motorgehäuseflansch 12 ist von einer Schutzschicht 18 zumindest auf der Seite des Pumpenraums 2 bedeckt, so dass diese Außenseite des Flansches 12 gegen aggressive Medien geschützt ist. Darüber hinaus bedeckt die Schutzschicht 18 in der in Fig. 1 dargestellten Ausführung auch noch die ringförmige Erweiterung 12a des Flansches 12 und endet an der Innenfläche des Spalttopfes 6. Hierbei liegt zwischen der Schutzschicht 18 und der Spalttopfinnenwand ein Dichtring 17.

Die Schutzschicht 18 bedeckt damit auch die Innenfläche der zylindrischen Öffnung 13 der ringförmigen Erweiterung 12a, so dass die Schutzschicht zwischen der Innenfläche und der zylindrischen Außenfläche des buchsenförmigen Radiallagers 9 liegt.

Auf der der Hydraulik abgewandten Seite steht auf der Innenwand des Motorgehäuseflansches 12 ein koaxialer Ring 12b vor, der das hydraulikseitige Ende des Spalttopfes 6 außenseitig umgreift und zentriert.

Die Schutzschicht 18 ist soweit radial nach außen geführt, dass sie zwischen den beiden Grenzflächen dichtend liegt, mit denen das Motorgehäuse an dem Pumpengehäuse anliegt. An dieser Stelle kann noch ein Dichtungsring 30 koaxial liegen.

Die Schutzschicht 18 besteht aus Kunststoff oder Keramik, alternativ ist die Schutzschicht 18 durch eine elektrolytische Oxidation der Oberfläche gebildet, wenn der Motorgehäuseflansch aus Aluminium besteht. Zum Einsatz kommt ein Eloxal-Verfahren, wie das sogenannte Hard-Coat-Verfahren, bei dem die Oberflächenschicht eines Aluminium Werkstücks elektrolytisch in eine harte und tiefe Aluminium-Oxid Schicht umgewandelt wird. Diese Aluminium-Oxid Schicht hat eine hohe Oberflächenhärte mit einer erhöhten Korrosions- und Verschleißfestigkeit.

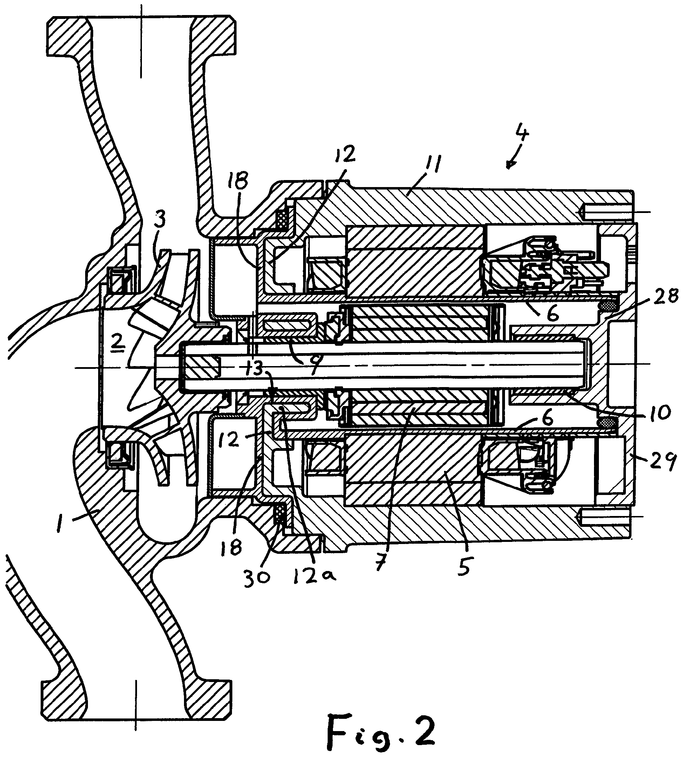

Die in Fig. 2 dargestellte Ausführung unterscheidet sich von der nach Fig. 1 im Wesentlichen dadurch, dass der Kunststoff der Schutzschicht 18, die den Motorgehäuseflansch 12 bedeckt, in den Kunststoff des Spalttopfes 6 übergeht, so dass die Schutzschicht 18 und der Spalttopf 6 einstückig von demselben Kunststoff gebildet sind. Bei dieser Ausführung wird das Spaltrohr bei der Umspritzung des Motorgehäuses einstückig miterstellt.

Bei einer solchen Ausführung ist der Boden des Spalttopfes 6 nicht durch seinen Kunststoff verschlossen, sondern von einem Spaltrohr gebildet, dessen der Hydraulik abgewandtes offenes Ende durch ein Dichtungselement verschlossen ist, das einen Lagerflansch 28 aufweist, der auch den Verschlussdeckel 29 des Motorgehäuses bildet und das Radiallager 10 der Motorwelle 8 stützt.

Diese zweite Variante eignet sich besonders für eine Herstellung in einem Kunststoffspritzverfahren, bei dem das hydraulikseitige Radiallager 9 in ein Spritzwerkzeug eingelegt wird und danach der Kunststoff der Schutzschicht 18 des Motorgehäuseflansches 12 und des Spalttopfes 6 eingespritzt wird.

## Patentansprüche

1. Nassläufermotorpumpe mit einem Motorgehäuse (4), einem vom Motorgehäuse (4) umgebenen Stator (5), einem Spalttopf (6), einem vom Stator durch den Spalttopf (6) getrennten Rotor (7), einen vom Spalttopf gebildeten Rotorraum, in dem der Rotor (7) läuft, eine Welle (8) und ein Pumpenlaufrad (3), das über die Welle (8) mit dem Rotor (7) verbunden ist, und einem hydraulikseitigen Radiallager (9), wobei das Motorgehäuse (4) an seinem dem Pumpenlaufrad (3) zugewandten Ende einen nach innen gerichteten Motorgehäuseflansch (12) aufweist, der zumindest auf der dem Pumpenlaufrad zugewandten Seite von einer Schutzschicht (18) bedeckt ist, **dadurch gekennzeichnet, dass** die Schutzschicht (18) zwischen dem Motorgehäuseflansch (12) und der Welle (8) das hydraulikseitige Radiallager (9) umgibt und mit dem Motorgehäuseflansch (12) die Funktion eines Lagerträgers übernimmt.

2. Nassläufermotorpumpe nach Anspruch 1, **dadurch gekennzeichnet, dass** der nach innen gerichtete Motorgehäuseflansch (12) auf der dem Pumpenlaufrad abgewandten Seite zumindest teilweise von einer Schutzschicht (18) bedeckt ist.

3. Nassläufermotorpumpe nach Anspruch 1 oder 2, **dadurch gekennzeichnet, dass** die Schutzschicht (18) eine den Motorgehäuseflansch (12) umgebende Kunststoffschicht ist.

4. Nassläufermotorpumpe nach Anspruch 1 oder 2, **dadurch gekennzeichnet, dass** die Schutzschicht (18) aus Keramik besteht.

5. Nassläufermotorpumpe nach Anspruch 1 oder 2, **dadurch gekennzeichnet, dass** das Motorgehäuse (4) und der Motorgehäuseflansch (12) aus Aluminium bestehen und die Oberfläche des Motorgehäuseflansches eine oxidische Schutzschicht (18) aufweist.

6. Nassläufermotorpumpe nach Anspruch 5, **dadurch gekennzeichnet, dass** die oxidische Schutzschicht (18) im Hard-Coat-Verfahren hergestellt ist.

7. Nassläufermotorpumpe nach einem der vorherigen Ansprüche, **dadurch gekennzeichnet, dass** das innere Ende des Motorgehäuseflansches (12) eine ringförmige, zum Stator (5) gerichtete, zur Motorachse koaxiale Erweiterung (12a) bildet, die von der Schutzschicht (18) zwischen dem Motorgehäuseflansch (12) und der Welle (8) umgeben ist und das Radiallager (9) stützt.

8. Nassläufermotorpumpe nach einem der vorherigen Ansprüche, **dadurch gekennzeichnet, dass** der Motorgehäuseflansch (12) auf seiner dem Pumpenlaufrad (3) abgewandten Seite einen zum Stator (5) hin vorspringenden, zur Motorachse koaxialen Ring (12b) bildet, der das dem Pumpenlaufrad (3) zugewandte Ende des Spalttopfes (6) außen umgibt.

9. Nassläufermotorpumpe nach Anspruch 8, **dadurch gekennzeichnet, dass** das dem Pumpenlaufrad (3) zugewandte Ende des Spalttopfes (6) zwischen der Erweiterung (12a) und dem Ring (12b) des Motorgehäuseflansches (12) einliegt.

10. Nassläufermotorpumpe nach Anspruch 9, **dadurch gekennzeichnet, dass** zwischen dem Ende des Spalttopfes (6) und der ringförmigen Erweiterung (12a) des Motorgehäuseflansches (12) ein zur Motorachse koaxialer Dichtring (17) einliegt.

11. Nassläufermotorpumpe nach Anspruch 3 oder nach einem der auf Anspruch 3 rückbezogenen Ansprüche 7 bis 10, **dadurch gekennzeichnet, dass** der Spalttopf (6) aus Kunststoff hergestellt ist und die Schutzschicht (18) aus Kunststoff einstückig mit dem Kunststoff des Spalttopfes (6) verbunden ist.

12. Nassläufermotorpumpe nach Anspruch 11, **dadurch gekennzeichnet, dass** die Kunststoff-Schutzschicht (18) des Motorgehäuseflansches (12) gleichzeitig mit dem Kunststoff des Spalttopfes (6) durch Kunststoffspritzen erstellt ist.

13. Nassläufermotorpumpe nach einem der vorherigen Ansprüche, **dadurch gekennzeichnet, dass** der Spalttopf (6) ein Spaltrohr aufweist, das auf der der Hydraulik abgewandten Seite durch ein Dichtungselement (28) verschlossen ist.

14. Nassläufermotorpumpe nach Anspruch 13, **dadurch gekennzeichnet, dass** das Dichtungselement (28) von einem Lagerflansch eines Radiallagers (10) gebildet ist, das die Welle (8) auf dem der Hydraulikseite abgewandten Wellenende lagert.

15. Verfahren zum Herstellen eines Motors einer Nassläufermotorpumpe nach einem der vorherigen Ansprüche, **dadurch gekennzeichnet, dass** das hydraulikseitige Radiallager (9) in ein Spritzwerkzeug eingelegt wird und danach der Kunststoff der Schutzschicht (18) des Motorgehäuseflansches (12) eingespritzt wird.

## Claims

1. Wet-rotor motor pump with a motor housing (4), a stator (5) surrounded by the motor housing (4), a separating can (6), a rotor (7) separated from the stator by the separating can (6), a rotor chamber formed by the separating can in which the rotor (7) runs, a shaft (8) and a pump impeller (3) that is connected to the rotor (7) by the shaft (8), and a radial bearing (9) on the hydraulics side, in which the motor housing (4) at its end facing the pump impeller (3) has an inward-facing motor housing flange (12) that, at least on the side facing the pump impeller, is covered by a protective layer (18), **characterised by** the protective layer (18) between the motor housing flange (12) and the shaft (8) surrounding the hydraulic-side radial bearing (9) and assuming the function of a bearing support together with the motor housing flange (12).

2. Wet-rotor motor pump according to claim 1, **characterised by** the inward-facing motor housing flange (12) being covered at least in part by a protective layer (18) on the side facing away from the pump impeller.

3. Wet-rotor motor pump according to claim 1 or 2, **characterised by** the protective layer (18) being a plastic layer surrounding the motor housing flange (12).

4. Wet-rotor motor pump according to claim 1 or 2, **characterised by** the protective layer (18) consisting of ceramics.

5. Wet-rotor motor pump according to claim 1 or 2, **characterised by** the motor housing (4) and the motor housing flange (12) consisting of aluminium and the surface of the motor housing flange having an oxidic protective layer (18).

6. Wet-rotor motor pump according to claim 5, **characterised by** the oxidic protective layer (18) being produced using the hard coat process.

7. Wet-rotor motor pump according to one of the preceding claims, **characterised by** the inner end of the motor housing flange (12) forming an annular flaring (12a) facing the stator (5) and coaxial to the motor axis, which is surrounded by the protective layer (18) between the motor housing flange (12) and the shaft (8) and supports the radial bearing (9).

8. Wet-rotor motor pump according to one of the preceding claims, **characterised by** the motor housing flange (12) on its side facing away from the pump impeller (3) forming a ring (12b) coaxial to the motor axis that projects toward the stator (5), which surrounds the outside of the end of the separating can (6) that faces the pump impeller (3).

9. Wet-rotor motor pump according to claim 8, **characterised by** the end of the separating can (6) facing the pump impeller (3) engaging between the flaring (12a) and the ring (12b) of the motor housing flange (12).

10. Wet-rotor motor pump according to claim 9, **characterised by** a sealing ring (17) coaxial to the motor axis inserted between the end of the separating can (6) and the annular flaring (12a) of the motor housing flange (12).

11. Wet-rotor motor pump according to claim 3 or one of the claims 7 through 10 referring back to claim 3, **characterised by** the separating can (6) being made of plastic and the plastic protective layer (18) being joined to the plastic of the separating can (6) as one piece.

12. Wet-rotor motor pump according to claim 11, **characterised by** the plastic protective layer (18) of the motor housing flange (12) being manufactured simultaneously with the plastic of the separating can (6) by means of plastic injection moulding.

13. Wet-rotor motor pump according to one of the preceding claims, **characterised by** the separating can (6) having a split tube that is closed by a sealing element (28) on the side facing away from the hydraulics.

14. Wet-rotor motor pump according to claim 13, **characterised by** the sealing element (28) being formed by a bearing flange of a radial bearing (10) that supports the shaft (8) on the end of the shaft facing away from the hydraulics.

15. Method for producing a motor of a wet-rotor motor pump according to one of the preceding claims, **characterised by** the hydraulic-side radial bearing (9) being inserted into an injection moulding tool, followed by injection of the plastic for the protective layer (18) of the motor housing flange (12).

## Revendications

1. Motopompe à rotor noyé avec un carter de moteur (4), un stator (5) enveloppé par le carter du moteur (4), un pot d'entrefer (6), un rotor (7) séparé du stator par le pot d'entrefer (6), un espace de rotor créé par le pot d'entrefer dans lequel le rotor (7) tourne, un arbre (8) et un rotor de pompe (3) relié par l'arbre (8) au rotor (7) et un palier radial côté hydraulique (9), sachant que le carter du moteur (4) à son extrémité tournée vers le rotor de pompe (3) présente une bride de carter de moteur (12) orientée vers l'intérieur et recouverte, au moins du côté orienté vers le rotor de pompe, par une couche de protection (18), **caractérisée en ce que** la couche de protection (18), entre la bride du carter de moteur (12) et l'arbre (8), enveloppe le palier radial côté hydraulique (9) et avec la bride du carter de moteur (12) a fonction de porte-palier.

2. Motopompe à rotor noyé selon la revendication 1, **caractérisée en ce que** la bride du carter de moteur orientée vers l'intérieur (12) est du moins en partie recouverte par une couche de protection (18) du côté orienté vers le rotor de pompe.

3. Motopompe à rotor noyé selon les revendications 1 ou 2, **caractérisée en ce que** la couche de protection (18) est une couche de matière plastique enveloppant la bride du carter de moteur (12).

4. Motopompe à rotor noyé selon les revendications 1 ou 2, **caractérisée en ce que** la couche de protection (18) est en céramique.

5. Motopompe à rotor noyé selon les revendications 1 ou 2, **caractérisée en ce que** le carter du moteur (4) et la bride du carter de moteur (12) sont en aluminium et la surface de la bride du carter de moteur présente une couche de protection d'oxyde (18).

6. Motopompe à rotor noyé selon la revendication 5, **caractérisée en ce que** la couche de protection d'oxyde (18) est réalisée par procédé de revêtement dur.

7. Motopompe à rotor noyé selon l'une des revendications précédentes, **caractérisée en ce que** l'extrémité intérieure de la bride du carter de moteur (12) forme un élargissement (12a) annulaire coaxial par rapport à l'axe du moteur orienté vers le stator (5) et enveloppé par la couche de protection (18) entre la bride du carter de moteur (12) et l'arbre (8) et supportant le palier radial (9).

8. Motopompe à rotor noyé selon l'une des revendications précédentes, **caractérisée en ce que** la bride du carter de moteur (12) de son côté orienté vers le rotor de pompe (3) créé un anneau (12b) en saillie en direction du stator (5) et coaxial par rapport à l'axe du moteur et enveloppant à l'extérieur l'extrémité du pot d'entrefer (6) orientée vers le rotor de pompe (3).

9. Motopompe à rotor noyé selon la revendication 8, **caractérisée en ce que** l'extrémité du pot d'entrefer (6) orientée vers le rotor de pompe (3) est posée entre l'élargissement (12a) et l'anneau (12b) de la bride du carter de moteur (12).

10. Motopompe à rotor noyé selon la revendication 9, **caractérisée en ce qu'**une bague d'étanchéité (17) coaxial par rapport à l'axe du moteur est posée entre l'extrémité du pot d'entrefer (6) et l'élargissement annulaire (12a) de la bride du carter de moteur (12).

11. Motopompe à rotor noyé selon la revendication 3 ou selon l'une des revendications 7 à 10 renvoyant à la revendication 3, **caractérisée en ce que** le pot d'entrefer (6) est en matière plastique et la couche de protection (18) en matière plastique et intégrée à la matière plastique du pot d'entrefer (6).

12. Motopompe à rotor noyé selon la revendication 11, **caractérisée en ce que** la couche de protection (18) de matière plastique de la bride du carter de moteur (12) est créée par injection en même temps que la matière plastique du pot d'entrefer (6).

13. Motopompe à rotor noyé selon l'une des revendications précédentes, **caractérisée en ce que** le pot d'entrefer (6) présente une gaine fermée du côté du circuit hydraulique par un élément d'étanchéité (28).

14. Motopompe à rotor noyé selon la revendication 13, **caractérisée en ce que** l'élément d'étanchéité (28) est formé par une bride de palier d'un palier radial (10) supportant l'arbre (8) au niveau de son extrémité orientée côté hydraulique.

15. Procédé de fabrication d'un moteur d'une motopompe à rotor noyé selon l'une des revendications précédentes, **caractérisé en ce que** le palier radial côté hydraulique (9) est inséré dans un moule à injection avant que la matière plastique de la couche de protection (18) de la bride du carter de moteur (12) soit injectée.
